# EUROPÄISCHE PATENTANMELDUNG

(11) **EP 0 935 043 A2**
(43) Veröffentlichungstag der Anmeldung: **11.08.1999**
(21) Anmeldenummer: 99101885.4
(22) Anmeldetag: 28.01.1999
(51) Int. Cl.: E05F 15/20

(54) **Verfahren und Vorrichtung zur Ansteuerung und/oder Überwachung eines motorisch angetriebenen Flügels**

(30) Priorität: 05.02.1998 DE 19804573
(71) Anmelder: agta record ag, 8320 Fehraltorf (CH)
(72) Erfinder: Minder, Hans, 8305 Dietlikon (CH)
(74) Vertreter: Flach, Dieter Rolf Paul, Dipl.-Phys.

(57) **Zusammenfassung**

Ein verbessertes Verfahren zur Ansteuerung und/oder Überwachung eines angetriebenen Flügels, insbesondere einer Tür, eines Fensters oder dgl. sowie eine zugehörige Vorrichtung zeichnen sich vor allem dadurch aus, daß vor dem Beginn, bei Beginn oder während des Schließvorganges des Flügels (1a, 1b, 1c) in einer Sensoreinrichtung (9) und/oder einer Auswert- und/oder Steuerstufe (23, 25) eine Umschaltung von einem größeren oder anfänglichen Überwachungs- und Auslösebereich (19) und/oder einer erhöhten Empfindlichkeit auf einen kleiner und/oder lageveränderten Überwachungs- und Auslösebereich (19') bzw. eine niedrigere Empfindlichkeit vorgenommen wird, um eine Selbstauslösung der Tür zu verhindern.

## Beschreibung

Die Erfindung betrifft ein Verfahren sowie eine Vorrichtung zur Ansteuerung und/oder Überwachung eines motorisch angetriebenen Flügels, insbesondere einer Tür, eines Fensters oder vergleichbarer Einrichtungen. Dazu sind üblicherweise nachfolgend auch als Erfassungs- und Überwachungsmittel bezeichnete Einrichtungen vorgesehen, wie sie auch unter den Begriffen "Sensoren" allgemein oder beispielsweise "Bewegungsmelder" im besonderen bekannt sind. Ferner ist üblicherweise eine Auswert- und Steuerungseinrichtung vorgesehen, die getrennt oder gemeinsam aufgebaut sein kann. Darüber wird letztlich der Antrieb eines Flügels gesteuert.

Die nachfolgend allgemein auch als Sensoren bezeichneten Überwachungs- und Erfassungsmittel, wie sie üblicherweise zur Steuerung und Überwachung von Türen eingesetzt werden, unterscheiden sich im Hinblick auf ihre technische Funktion und/oder Anwendung.

Bewegungsmelder arbeiten dabei üblicherweise nach dem Doppelprinzip, d.h. daß ein Signal in den Überwachungs- und Auslösebereich der zu überwachenden Tür (gleichgültig ob es sich um eine Flügeltür, eine Schiebetür, Karusselltür oder dgl. handelt) abgestrahlt und die reflektierte Strahlung empfangen und ausgewertet wird. Fallt die Strahlung auf eine bewegte Person, so ergibt sich in Abhängigkeit der Relativbewegung der bewegten Person auf den Strahler zu oder von diesem weg eine Frequenzverschiebung. Grundsätzlich können derartige Bewegungsmelder auf der Basis von Ultraschall, Infrarotstrahlung oder nach dem Radarprinzip arbeiten.

Daneben sind auch sogenannte Zustandsmelder bekannt, die, ebenfalls auf unterschiedlichen technischen Prinzipien, häufig im Infrarotbereich arbeiten. Dabei sind in der Regel Zustandsmelder bekannt, die die sogenannte Passiv-Infrarotstrahlung auswerten. Durch Messung der im Überwachungs- und Auslösebereich abgegebenen Strahlung durch die Sensoren und Detektoren kann in Abhängigkeit der sich verändernden Intensität der Strahlung eine entsprechende Auswertung und Ansteuerung der zu öffnenden und zu schließenden Tür vorgenommen werden.

Ferner sind auch sogenannte Präsens-Detektoren, insbesondere zum Absichern von Quetsch- und Scherkanten bekannt. Der einfachste Detektor dieser Art ist die sogenannte Lichtschranke, die beispielsweise bei Schiebetüranordnungen zur Absicherung eingesetzt wird. Weiterhin ist eine Reihe von Geräten, Tastern und Tastsensoren bekannt, die häufig auf der Aktiv-Infrarot-Technik basieren. Ebenso sind in diesem Bereich auch Geräte mit Ultraschall, Lasertechnik und Bilderkennung (CCD) anzutreffen.

Da die vorstehend genannten Präsensdetektoren teurer als Bewegungsmelder sind und zudem auch nur ein sehr begrenztes Erfassungsfeld, d.h. ein sehr begrenztes Überwachungs- und Auslösefeld aufweisen, sind auch schon kombinierte Steuerungs- und Überwachungseinrichtungen und -geräte vorgeschlagen worden, die einen Bewegungsmelder und einen Aktiv-Infrarot-Taster enthalten.

Alle bisherigen Überwachungs- und Steuerungseinrichtungen für bewegte Flügel, insbesondere Türen, weisen aber stets den Nachteil auf, daß entweder der Überwachungs- und Auslösebereich nicht ideal gewählt ist, wenn nämlich insbesondere in dem zu überwachenden Bereich noch sogenannte Totzonen vorhanden sind, oder aber die Gefahr einer Selbstauslösung der Tür besteht.

Gemäß der DE 36 18 692 C2 wird zur Überwachung eines Türbereiches vorgeschlagen, beidseitig des Türdurchgangs eine größere und eine kleinere Überwachungszone vorzusehen, um eine Öffnungs- und Schließbewegung der zu überwachenden Türflügel mit höherer Sicherheit insbesondere dann vorzunehmen, wenn sich während des Verlassens des zu überwachenden Türbereiches bereits eine nächste Person diesem Bereich nähert.

Gemäß der US 5 142 152 wird eine Sensorvorrichtung vorgesehen, und zwar mit einem Schwellen-Sensor, der den unmittelbaren Türdurchgangsbereich überwacht und unter Verwendung eines weiteren Sensors, der den Bereich vor dem unmittelbaren Türdurchgang überwacht.

Aber auch bei den beiden zuletzt genannten bekannten Schiebetüranlagen und zugehörigen Steuerungsvorrichtungen bleiben Totzonen, die gewisse Gefahrenmomente entstehen lassen.

Aufgabe der vorliegenden Erfindung ist es von daher ein verbessertes Verfahren sowie eine zugehörige Vorrichtung zur Ansteuerung und/oder Überwachung eines angetriebenen Flügels, insbesondere einer Tür oder dgl. zu schaffen.

Die Aufgabe wird erfindungsgemäß bezüglich des Verfahrens entsprechend den im Anspruch 1 und bezüglich der Vorrichtung entsprechend den im Anspruch 14 angegebenen Merkmalen gelöst. Vorteilhafte Ausgestaltungen der Erfindung sind in den Unteransprüchen angegeben.

Das Hauptproblem bei Sensoren und Bewegungsmeldern nach dem Stand der Technik sind Störungen, die durch Selbstauslösung verursacht werden. Bei einem schlecht eingestellten Sensor kann die sich schließende Tür einen Öffnungsimpuls auslösen, der die Tür wieder öffnet bevor sie ganz geschlossen ist. Eine solche Tür kommt also nie mehr zur Ruhe, da sie ständig vor Erreichen der endgültigen Schließstellung wieder in Öffnungsstellung zurückverfahren wird.

Es wird häufig versucht, derartige beispielsweise durch eine schlechte Antennencharakteristik und/oder durch vorhandene Reflexionen provozierte Selbstauslösungen der Tür durch Verstellung und/oder unterschiedliche Ausrichtung des Sensors oder Bewegungsmelders zu unterbinden, beispielsweise dadurch, daß dessen Antenne verstellt und/oder dessen Seitenkeulen durch optimale Montage der Aufputzgeräte abgeschirmt werden. Dies hat aber zwangsläufig auch zur Folge, daß der Überwachungs und Auslösebereich verkleinert wird, so daß in gefährlichen Randbereichen unerwünschte Totzonen entstehen können, in denen keine Personensicherheit mehr gewährleistet ist.

Demgegenüber schlägt die vorliegende Erfindung vor, daß der Überwachungs- und/oder Auslösebereich entsprechend dem zu überwachenden Flügel- oder Türstatus verändert wird. Erfindungsgemäß wird der Überwachungs- und Auslösebereich grundsätzlich groß gewählt, so daß im Türbereich keine oder keine relevanten personengefährdenden Totzonen entstehen können oder vorhanden sind. Nur während des Schließvorganges ist vorgesehen, daß dann zumindest ein kleiner dimensionierter und/oder lageveränderter Überwachungs- und Auslösebereich wirksam wird, dergestalt, daß eine Selbstauslösung und Umschaltung des zu überwachenden Flügels in Öffnungsrichtung vermieden wird.

Bevorzugt kann dies dadurch erfolgen, daß zumindest eine Umschaltung auf einen kleiner dimensionierten und/oder lageveränderten Überwachungs- und Auslösebereich während des Schließvorganges der zu überwachenden Tür vorgesehen ist. Bevorzugt kann aber auch eine mehrstufige Umschaltung während des Schließvorganges dergestalt vorgesehen sein, daß in Abhängigkeit des fortschreitenden Schließvorganges der Überwachungs- und Auslösebereich stets so optimal nachgefahren wird, daß eine Selbstauslösung verhindert wird. Mit anderen Worten müssen die sich bewegenden Türflügel (beispielsweise bei einer einflügeligen Schwenktür, einer ein- oder mehrflügeligen Schiebetür) stets außerhalb des eine Auslösung über die Sensoren bewerkstelligenden Überwachungs- und Auslösebereiches liegen.

Bevorzugt kann auch eine kontinuierliche Nachführung (Verkleinerung) und Veränderung des Überwachungs- und Auslösebereiches während des Schließvorganges durchführt werden.

Nach Beenden des Schließvorganges kann dann wieder eine Umschaltung auf den maximalen großen Überwachungs- und Auslösebereich vorgenommen werden, um eine maximale Sicherheit zu gewährleisten.

Eine entsprechende Umschaltung und Nachführung des vom Türstatus abhängigen Überwachungs- und Auslösebereiches während des Öffnungszustandes eines Flügels ist nicht erforderlich, da hier ohnehin durch Fremdauslösung über die verwendete Sensoreinrichtung eine Umschaltung in Öffnungsstellung ausgelöst wurde.

Insbesondere bei intensitätsmessenden oder auch reflexionsmessenden Sensoreinrichtungen kann eine Verringerung des Überwachungs- und Auslösebereiches durch Herabsetzung der Empfindlichkeit der Sensoreinrichtung und/oder der Auswert- und/oder Steuerungselektronik durchgeführt werden.

In einer besonders bevorzugten Ausführungsform der Elektronik ist zudem eine Selbstkalibrierung vorgesehen, um bei dem Status "Tür schließen" eine Selbstauslösung zu vermeiden. Die Selbstkalibrierung zur Veränderung des wirksamen Überwachungs- und Auslösebereiches, bevorzugt durch die erwähnte Veränderung der Empfindlichkeit, wird bevorzugt durch ein vollautomatisch durchführbares Teach-In-Verfahren ermittelt. Während einer Öffnungs- und Schließbewegung der zumindest ein- oder mehrflügeligen Türen oder Fenster oder dgl. wird die Verstärkung des empfangenen Sensorsignales langsam erhöht, bis die zu überwachende Tür sich selbst dedektiert. Dann wird die Empfindlichkeit um einen bestimmten Faktor zurückgestellt, bis keine Gefahr für die Selbstauslösung mehr besteht.

Dadurch kann vor allem die zumindest zweistufige oder zumindest zwei unterschiedliche Überwachungs- und Auslösebereiche und/oder Empfindlichkeiten berücksichtigende Steuerungs- und Überwachungseinrichtung optimal bezüglich ihres Überwachungs- und Auslösebereiches während der Schließbewegung einer Tür voreingestellt werden. Programmtechnisch vorgegeben und/oder eingestellt oder nachlad- oder installierbar kann dann beispielsweise der gewünschte optimale große Überwachungs- und Auslösebereich für die anderen Zustände der zu überwachenden Tür (wie Schließstellung, Öffnungsstellung) etc. voreingestellt werden.

Die Erfindung wird nachfolgend anhand zweier Ausführungsbeispiele für den Fall einer Schiebetür und für den Fall einer Flügeltür erörtert. Dabei zeigen im einzelnen:
- Figur 1 :: eine schematische Frontansicht einer zweiflügeligen Schiebetüranordnung mit Sensoreinrichtung;
- Figur 2 :: eine schematische Horizontalschnittdarstellung durch das Ausführungsbeispiel gemäß Figur 1 mit unterschiedlichen Überwachungs- und Auslösebereichen;
- Figur 3 :: eine schematische Schaltungsanordnung unter Einbezug einer Sensoreinrichtung und einer Antriebseinrichtung;
- Figur 4 :: eine entsprechende Darstellung zu Figur 2 während des Schließvorganges;
- Figur 5 :: eine entsprechende Darstellung zu Figur 2 für den Fall einer einflügeligen Schwenktür im geschlossenen Zustand; und
- Figur 6 :: eine entsprechende Darstellung des Ausführungsbeispieles nach Figur 5 bei geöffnetem Türflügel.

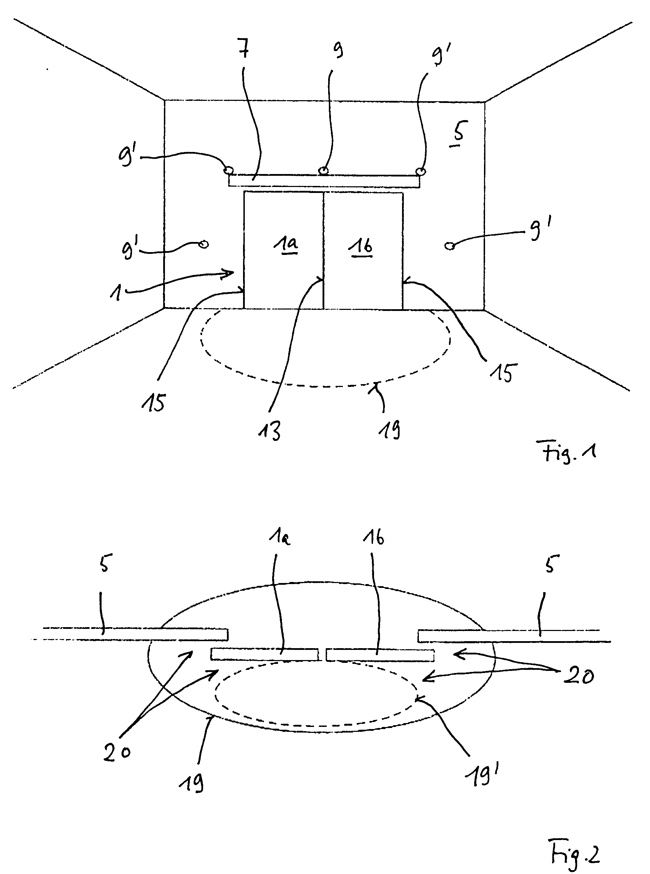

In Figur 1 ist in schematischer Darstellung eine zweiflügelige Schiebetür 1 mit zwei Türflügeln 1a und 1b im geschlossenen Zustand gezeigt. Die Tür ist in einer Wand 5 vorgesehen.

Die Türflügel werden in bekannter Weise über eine oberhalb des Türdurchbruches horizontal verlaufende und in Figur 1 mit dem Bezugszeichen 7 bezeichnete Laufschiene verfahrbar gehalten und über beispielsweise einen nicht näher gezeigten Elektromotor unter Zwischenschaltung eines umlaufenden Zahnriemens zwischen Öffnungs- und Schließstellung verfahren.

Im gezeigten Ausführungsbeispiel ist oberhalb des Türdurchbruches, d.h. im Bereich der Aufhäng- und Laufanordnung der verfahrbaren Türflügel 1a und 1b eine Sensoreinrichtung 9 vorgesehen, bevorzugt mittig oberhalb des Türdurchbruches. Unter Sensoranordnung bzw. Sensoreinrichtung 9 werden alle geeigneten Überwachungs- und/oder Erfassungseinrichtungen verstanden, mit denen in technischer Hinsicht sich bewegende Objekte (insbesondere Personen) und/oder auch unbewegte Objekte erfaßt oder dedektiert werden können. Abweichend von dieser Sensoranordnung 9 können auch mehrere einzelne Sensoren 9' über einen größeren Teil der Breite der Tür oder über die gesamte Türbreite oder darüberhinausgehend oder ein durchgängiger Sensorbalken vorgesehen sein. Ergänzend und alternativ können die Sensoren auch auf den Türflügeln selbst oben mittig und/oder unten und/oder eher an den Schließkanten 13 und/oder an den jeweils gegenüberliegenden Außenkanten 15 und/oder an der Wand 5 selbst (beispielsweise auch über eine vertikale Wegstrecke verlaufend, z.B. als Vertikalbalken) vorgesehen oder angeordnet sein.

Die einen einzelnen Sensor oder mehrere Sensoren 9', beispielsweise in Form von Infrarotsensoren oder Radarsensoren etc., umfassende Sensoranordnung 9 ermöglicht es, beispielsweise den vor der Tür befindlichen und auf dem Boden 17 (Figur 2) strichliert gezeichneten Überwachungs- und Auslösebereich zu überwachen.

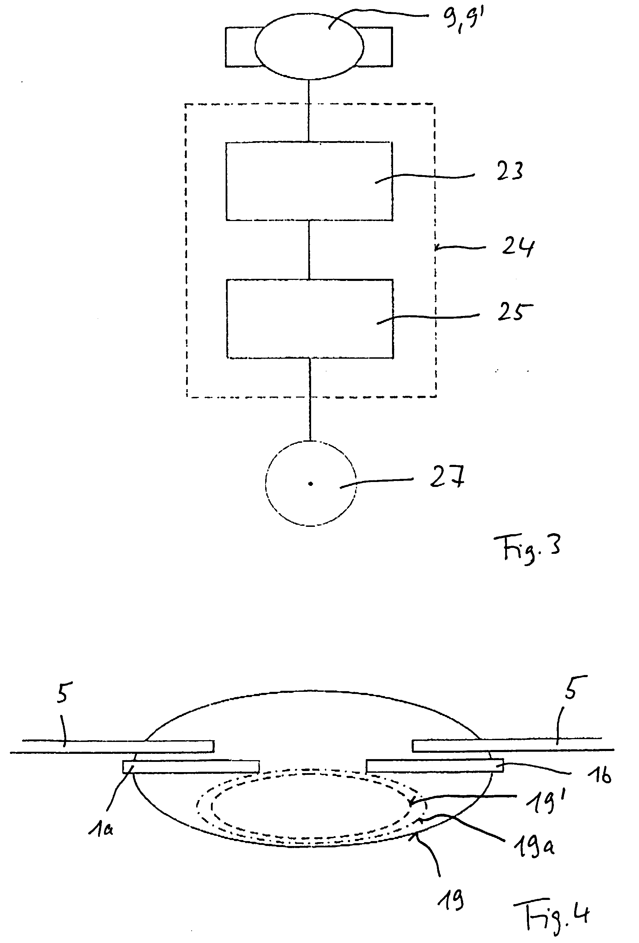

Nähert sich eine Person der Tür und kommt in den Bereich der Überwachungs- und Auslösezone 19, so wird über die Sensoranordnung (bei einem Radarsensor in Form der empfangenen, vom Objekt reflektierten Strahlen; im Falle eines Infrarotsensors durch die Infrarotstrahlung) ein entsprechendes Signal empfangen, welches entsprechend der schematischen Schaltungsanordnung nach Figur 3 in einer Auswertstufe 23 ausgewertet und in einer nachfolgenden Steuerungsstufe 25 umgesetzt wird, um eine Antriebsanordnung 27 zum Öffnen der Schiebetür 1 anzusteuern. Abweichend zu Figur 3 kann die Auswert- und Steuerungsstufe 23, 25 auch zu einer einheitlichen Stufe 24 zusammengefaßt sein. Sie kann entweder hartverdrahtet aufgebaut sein, besteht aber vorzugsweise aus einer mikroprozessorgesteuerten Elektronik.

Die Auslösezone 19 ist in den Figuren flächig dargestellt. Die Auslösezone ist jedoch räumlich zu verstehen. Sie erstreckt sich in dem Raum oberhalb des eingezeichneten Bereiches. In unterschiedlichen Parallelebenen zum Boden kann sie auch unterschiedlich groß dimensioniert sein.

Wie anhand der Darstellung gemäß den Figuren 1 und 2 zu sehen ist, ist die Überwachungs und Auslösezone 19 so groß gewählt, daß sie den gesamten Türbereich über die Türflügel 1a und 1b im geschlossenen Zustand hinaus überwacht, so daß keine oder keine relevanten Totzonen 20 entstehen und selbst sich sehr stark seitlich auf die Tür zubewegende Personen frühzeitig erkannt werden können. In Figur 2 sind die Totzonen 20 beispielsweise für den Fall einer kleiner dimensionierten Überwachungs- und Auslösezone 19' eingezeichnet.

Dieser große in Figur 2 strichliert wiedergegebene Überwachungsund Auslösebereich 19 kann sowohl im Zustand "Türen geschlossen" als auch im Zustand "Türen geöffnet" problemlos beibehalten werden.

Auch während des Türzustandes "Türen öffnen" kann dieser große Überwachungs- und Auslösebereich 19 aufrecht erhalten bleiben, wobei dies ohnehin unproblematisch ist, da sich die Türen bereits im Verstellzustand "Türen öffnen" befinden. Befinden sich die Türflügel 1a, 1b in geöffnetem Zustand und soll nach Ablauf einer in der Regel vorgegebenen Wartezeit von dem geöffneten Zustand wieder in Schließstellung verfahren werden, weil in dem großdimensionierten Überwachungs und Auslösebereich 19 keine sich auf die Tür zubewegende Person über die Sensoreinrichtung erkannt wird, so wird zunächst von der großen Überwachungs- und Auslösezone 19 auf eine kleine Überwachungs- und Auslösezone 19' umgeschaltet. Der Auslösebereich der Sensoranordnung 9 ist also in diesem Ausführungsbeispiel zweistufig ausgelegt, wobei die Umschaltung auf "kleine Überwachungs und Auslösezone 19' durch entsprechende Umschaltung der Sensoreinrichtung von "hohe Empfindlichkeit" auf "niedrige Empfindlichkeit" in der Auswert und/ oder Steuerungsstufe 23, 25 bzw. 24 bewerkstelligt werden kann.

Durch die Umschaltung auf kleine Überwachungs- und Auslösezone 19' bzw. niedrige Empfindlichkeit bei geöffnetem Zustand der Tür unmittelbar vor Einleitung des Schließvorganges der Tür wird die Personensicherheit nicht reduziert, da sich niemand im Erfassungsbereich der großen Überwachungs- und Auslösezone 19 bei hoher Empfindlichkeit befindet. In Figur 2 ist die kleine Überwachungs- und Auslösezone 19' bei niedriger Empfindlichkeit der bevorzugt in Form eines Radars ausgebildeten Sensoreinrichtung 9 eingezeichnet, woraus ersichtlich ist, daß während des Schließvorganges durch die Türflügel 1a, 1b eine Selbstauslösung vermieden wird, da die Türflügel nicht in die verringerte Überwachungs- und Auslösezone 19' hineinfahren können. Daraus ist also ersichtlich, daß die Bewegungsbahn des zumindest einen Türflügels den Überwachungs- und Auslösebereich 19 im üblichen Betriebsmodus schneidet, wohingehend bei Umschaltung auf einen kleineren Überwachungs- und Auslösebereich der zumindest eine Türflügel in die verriegelte Überwachungs- und Auslösezone 19' nicht mehr hineinfährt.

Der Vollständigkeit halber wird erwähnt, daß durch geeignete technische und/oder mechanische Maßnahmen gegebenenfalls auch keine oder nicht nur eine Verringerung der Dimensionierung des Überwachungs- und Auslösebereiches 19 beim Schließvorgang erfolgt, sondern alternativ oder ergänzend eine Lage- und Positionsveränderung der Auslösezone 19 dergestalt möglich ist, daß eine Selbstauslösung vermieden wird.

Nach endgültigem Erreichen der Schließstellung wird dann wieder durch ein weiteres Auslösesignal eine Umschaltung hin zum großen, in den Figuren 1 und 2 strichliert eingezeichneten Überwachungs und Auslösebereich 19 bei z.B. hoher Empfindlichkeit umgeschaltet. Sollte während des Schließvorganges eine Person bei verringerter Empfindlichkeit den auf kleine Dimensionierung umgeschalteten Überwachungs- und Auslösebereich 19' betreten, so wird dies über die Sensoreinrichtung dedektiert und über die Auswert- und Steuerungsstufe sofort wieder die Antriebseinrichtung in Öffnungsstellung umgesteuert, wobei bereits gleichzeitig oder danach, nach Erreichen der Öffnungsstellung der Türflügel oder aber spätestens vor Ablauf einer voreingestellten oder vorgegebenen Wartezeit vor Einleitung einer nächsten Schließfolge, wieder auf großen Überwachungs- und Auslösebereich 19 (hohe Empfindlichkeit) umgeschaltet wird.

Wie aus der Darstellung gemäß Figur 2 ersichtlich ist, ist die große Auslöse und Überwachungszone 19 in diesem Ausführungsbeispiel so ausgelegt, daß - insbesondere bei geöffneter Tür - die an einer Seite der Wand angebrachte Sensoreinrichtung 9 sogar durch die geöffnete Tür hindurch in einem gewissen Bereich im gegenüberliegenden Raum eine Überwachung durchführen kann. Bei Bedarf und Notwendigkeit kann an der gegenüberliegenden Seite der Wand (auf der Rückseite der Tür) eine weitere Sensoreinrichtung vorgesehen sein, um entsprechend spiegelbildlich den anderen Zugang zur Tür im anderen Raum zu überwachen.

Eine weitere Verfeinerung kann dadurch erzielt werden, daß nicht nur eine zweistufige, sondern auch eine mehrstufige Nachführung vom großen zum kleinen Auslösebereich 19, 19' durchgeführt wird.

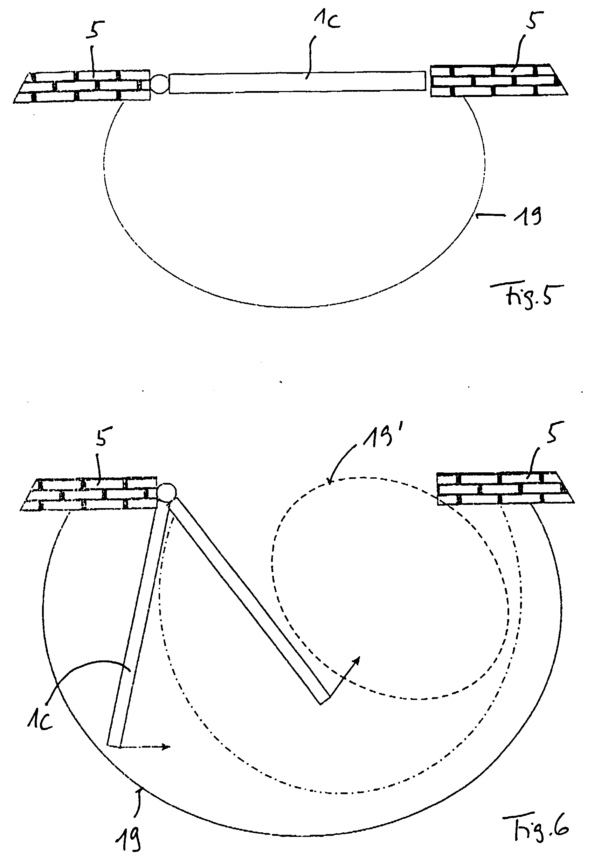

Dies ist anhand von Figur 4 schematisch für den Fall angedeutet, daß nach Einleitung der Schließbewegung der Türflügel 1a, 1b (in Figur 3 sind sie etwa zur Hälfte geschlossen) von der ursprünglich großen Auslösezone 19 zunächst auf eine mittelgroße Auslösezone 19a und nach Erreichen der mittleren Schließstellung auf die kleine Überwachungs- und Auslösezone 19' umgeschaltet wird.

Schließlich kann in einer weiteren Abwandlung die Veränderung von dem großen Überwachungs und Auslösebereich 19 zum kleinen Überwachungs- und Auslösebereich 19' auch während des Schließvorganges der Tür kontinuierlich nachgeregelt und nachgeführt werden, so daß in jedem Zustand die größtmögliche Überwachungszone und größtmögliche Empfindlichkeit der Sensoreinrichtung gegeben ist, ohne daß eine Selbstauslösung provoziert wurde.

Die Figuren 5 und 6 zeigen die entsprechenden Zustände und Verhältnisse für den Fall einer Schwenkflügeltür 1c, wobei hier den unterschiedlichen Öffnungs- und Schließstellungen 31a, 31b, 31c für den Schwenkflügel 1c die unterschiedlich großen Überwachungs und Auslösezonen 19a, 19b, 19c zugeordnet sind. Unmittelbar vor dem letzten Schließvorgang des Schwenkflügels 1c wird die Überwachungszone auf "0" gestellt, also ausgeschaltet.

Nach Schließung der Tür wird wieder auf großen Überwachungs- und Auslösebereich 19 umgeschaltet (Figur 5).

Um während des Schließvorganges der Tür - wenn sich im Bereich der Rückseite der Tür eine Person nähern sollte - wieder in Öffnungsrichtung umzuschalten` kann hier eine zusätzliche Sensoreinrichtung 9'' vorgesehen sein, wie dies in der vertikalen Draufsicht in Figur 5 angedeutet ist.

Für die einwandfreie und sichere Funktion derartiger automatischer Türen ist die richtige Einstellung der Auslöseorgane vor allem während des Schließvorganges der Tür von zentraler Bedeutung.

Sind die Sensoren zu schwach und/oder im Auslösebereich 19 während der Schließstellung zu schwach bzw. zu klein ausgelegt, so ergibt sich eine unempfindliche Tür die nicht oder zu spät öffnet, oder bei der die Totzonen zu groß und damit Gefahrmomente vorhanden sind. Bei zu empfindlicher Einstellung besteht die erwähnte Gefahr der Selbstauslösung, was die unerwünschte Störung der Tür mit sich brächte.

Um die optimale Einstellung vorzunehmen wird bevorzugt ein vollautomatisch durchführbares Teach-In-Verfahren durchgeführt.

Insbesondere bei einer Sensoreinrichtung 9 in Form eines Radars wird in der Auswert- und/oder Steuerstufe 23, 25, von der zumindest einen oder von den beiden Stufen bevorzugt ein Mikroprozessor umfaßt und eine Verstärkung des Radarsignals eingestellt. Während einigen bei Inbetriebnahme der Tür durchzuführenden Öffnungs- und Schließbewegungen wird die Verstärkung von einem niedrigeren Wert langsam erhöht, bis die Tür beim Schließvorgang über die Sensoreinrichtung selbst dedektiert. Dann wird die Empfindlichkeit vorzugsweise um einen bestimmten Faktor zurückgestellt, bis keine Gefahr für eine Selbstauslösung mehr besteht.

Bei einem mehrstufig verkleinerten oder lageveränderten Auslösebereich (beispielsweise entsprechend Figur 4) können für die unterschiedlich groß gewählten Auslösezonen 19 in Abhängigkeit der jeweiligen Schließstellung bevorzugt in dem automatisch durchführbaren Teach-In-Verfahren jeweils die optimalen Einstellungen zur Bestimmung der optimalen Auslösezone ermittelt und bevorzugt in der Steuerungs- und Auswertstufe 23, 25 abgespeichert werden.

Bei Bedarf kann auch noch eine ergänzende manuelle Korrektur der automatischen Einstellung vorgenommen werden, vorzugsweise durch eine nicht näher in der Zeichnung dargestellte permanente oder zuschaltbare Eingabeeinrichtung, vorzugsweise unter Verwendung von Tastaturen.

Wenn also noch eine manuelle Beeinflussung zur Einstellung und Erzielung einer optimierten Schließ- und Öffnungsbewegung eines Flügels zu bewerkstelligen ist, ist bevorzugt die gesamte Anordnung so aufgebaut und vorgesehen, daß keine Nachjustierung an der Elektronik oder dem Sensor selbst (also direkt an der Hardware) vorgenommen werden muß, sondern allein über das Bedienungsfeld (Bedienungseingabegerät) die gewünschte Änderung oder manuelle Nachkorrektur oder eine allgemeine Veränderung des zuvor im Teach-In-Verfahren erzielten Resultates vorgenommen werden kann.

Auch wenn kein Teach-In-Verfahren durchgeführt werden sollte, kann bevorzugt über ein Eingabegerät die gewünschten Änderungen oder Daten eingegeben werden.

Sollte im Laufe des Betriebs der Tür durch eine auftretende Drift oder durch andere Umwelteinflüsse sich die Empfindlichkeit oder Auslösecharakteristik nachteilig verändern, so kann das vorstehend beschriebene Teach-In-Verfahren erneut durchgeführt werden. Es kommt dann zu einem entsprechenden automatischen Korrektur-Abgleich und zur Anpassung an die gegenwärtigen optimalen Betriebsbedingungen, um eine Selbstauslösung der Tür zu vermeiden.

Die zuletzt beschriebene optimale in einem Teach-In-Verfahren einzustellende und durchzuführende Selbstkalibrierung des Überwachungs und Auslösebereiches 19 bzw. der Empfindlichkeit der Sensoreinrichtung gilt gleichermaßen für Bewegungsmelder wie auch für statische Sensoren.

Grundsätzlich kann das Teach-In-Verfahren auch umgekehrt vorgenommen werden, daß von einer einem großen Verstärkungsfaktor beigegebenen Selbstauslösung ausgegangen und dann anschließend die Empfindlichkeit langsam verringert wird, bis keine Selbstauslösung mehr provoziert wird.

## Patentansprüche

1. Verfahren zur Ansteuerung und/oder Überwachung eines angetriebenen Flügels (1a, 1b, 1c), insbesondere einer Tür (1), eines Fensters oder dgl., mit einer Sensoreinrichtung (9) zur Überwachung und Erfassung eines zumindest einem Flügel (1a, 1b, 1c) zugeordneten Überwachungs- und Auslösebereiches (19), **dadurch gekennzeichnet**, daß vor dem Beginn, bei Beginn oder während des Schließvorganges des Flügels (1a, 1b, 1c) in der Sensoreinrichtung (9) und/oder der Auswert- und/oder Steuerstufe (23, 25) eine Umschaltung derart vorgenommen wird, daß von einem großen oder anfänglichem Überwachungs- und Auslösebereich (19) und/ oder einer höheren Empfindlichkeit auf einen kleineren und/oder lageveränderten Überwachungs- und Auslösebereich (19') bzw. eine niedrigere Empfindlichkeit derart umgeschaltet wird, daß während des Schließvorganges des Flügels (1a, 1b, 1c) eine Selbstauslösung und Umsteuerung des Flügels (1a, 1b, 1c) in Öffnungsstellung verhindert ist.

2. Verfahren nach Anspruch 1, **dadurch gekennzeichnet**, daß die Umsteuerung von einer großen und/oder anfänglichen Überwachungs- und Auslösezone (19) hin zu einer kleineren und/oder lageveränderten Überwachungs- und Auslösezone (19') im zeitlichen Zusammenhang mit dem Beginn des Schließvorganges und/oder im örtlichen Zusammenhang von der Schließposition des Flügels (1a, 1b, 1c) erfolgt.

3. Verfahren nach Anspruch 1 oder 2, **dadurch gekennzeichnet**, daß die Umsteuerung von einer großen und/oder anfänglichen Überwachungs und Auslösezone (19) hin zu einer kleinere und/oder lageveränderten Überwachungs- und Auslösezone (19') zumindest einstufig, vorzugsweise mehrstufig vorgenommen wird.

4. Verfahren nach einem der Ansprüche 1 bis 3, **dadurch gekennzeichnet**, daß die Umsteuerung von einer großen und/ oder anfänglichen Überwachungs- und Auslösezone (19) hin zu einer kleineren und/oder lageveränderten Überwachungs- und Auslösezone (19') kontinuierlich vorgenommen wird.

5. Verfahren nach einem der Ansprüche 1 bis 4, **dadurch gekennzeichnet**, daß eine Sensoreinrichtung (9) bestehend aus zumindest einem Bewegungsmelder, vorzugsweise in Form einer Radaranordnung, verwendet wird.

6. Verfahren nach einem der Ansprüche 1 bis 5, **dadurch gekennzeichnet**, daß die Empfindlichkeit beim Schließvorgang des Flügels (1a, 1b, 1c) von einer anfänglichen höheren Empfindlichkeit auf eine niedrigere Empfindlichkeit umgeschaltet wird.

7. Verfahren nach Anspruch 6, **dadurch gekennzeichnet**, daß die Umschaltung von hoher auf niedrige Empfindlichkeit zumindest zweistufig, vorzugsweise mehrstufig oder kontinuierlich während des fortschreitenden Schließvorganges des Flügels (1a, 1b, 1c) erfolgt.

8. Verfahren nach einem der Ansprüche 1 bis 7, **dadurch gekennzeichnet**, daß im zeitlichen und/oder positionsabhängigen Zusammenhang mit der Erreichung der Schließstellung des zumindest einen Flügels (1a, 1b, 1c) wieder eine Umschaltung auf großen und/oder anfänglichen Auslöse- und/oder Überwachungsbereich (19) und/oder hohe Empfindlichkeit vorgenommen wird.

9. Verfahren nach einem der Ansprüche 1 bis 8, **dadurch gekennzeichnet**, daß der große Überwachungs- und Auslösebereich (19) und/oder die hohe Empfindlichkeit der Sensoreinrichtung (9) während des Flügelzustandes "geschlossener Flügel" und "geöffneter Flügel" eingestellt wird.

10. Verfahren nach einem der Ansprüche 1 bis 9, **dadurch gekennzeichnet**, daß die Einstellung des zumindest einen kleineren Überwachungs oder Auslösebereiches (19) oder der zumindest einen niedrigeren Empfindlichkeit der Sensoreinrichtung (9) in einem automatischen Teach-In-Verfahren eingestellt wird.

11. Verfahren nach Anspruch 10, **dadurch gekennzeichnet**, daß in dem Teach-In-Verfahren ausgehend von einer kleineren Überwachungs- und Auslösezone (19) und/oder einer niedrigeren Empfindlichkeit der Sensoreinrichtung (9) eine Verstellung in der Auswert- und Steuerungsstufe (23, 25) dergestalt vorgenommen wird, daß die wirksame Überwachungsund Auslösezone (19) vergrößert und/oder die Empfindlichkeit der Sensoreinrichtung (9) derart erhöht wird, bis eine Selbstauslösung erreicht wird, und daß anschließend eine einen Sicherheitsabstand zur Vermeidung einer Selbstauslösung bewirkende Verstellung vorgenommen wird.

12. Verfahren nach Anspruch 10, **dadurch gekennzeichnet**, daß in dem Teach-In-Verfahren ausgehend von einer größeren Überwachungs- und Auslösezone (19) oder einer höheren Empfindlichkeit der Sensoreinrichtung (9) eine Verstellung in der Auswert- und Steuerungsstufe (23, 25) dergestalt vorgenommen wird, daß die wirksame Überwachungs- und Auslösezone (19) verkleinert und/oder die Empflichkeit der Sensoreinrichtung (9) derart verringert wird, bis eine Selbstauslösung vermieden ist.

13. Verfahren nach Anspruch 12, **dadurch gekennzeichnet**, daß nach Erreichen einer Einstellung, bei der eine Selbstauslösung vermieden ist, anschließend eine einen Sicherheitsabstand zur Vermeidung einer Selbstauslösung bewirkende nachträgliche Verstellung ergänzend vorgenommen wird.

14. Vorrichtung zur Ansteuerung und/oder Überwachung eines angetriebenen Flügels (1a, 1b, 1c), insbesondere einer Tür (1), eines Fensters oder dgl. mit einer Sensoreinrichtung (9) zur Überwachung und/oder Erfassung eines zumindest einem Flügel (1a, 1b, 1c) zugeordneten Überwachungs- und Auslösebereiches (19) und mit einer Auswert- und/oder Steuerstufe (23, 25; 24), worüber die von der Sensoreinrichtung (9) kommenden Daten ausgewertet werden und eine motorische Antriebseinrichtung (27) zur Bewegung des Flügels (1a, 1b, 1c) zugeführt werden, nach einem der Ansprüche 1 bis 13, **dadurch gekennzeichnet**, daß die Sensoreinrichtung (9) und/oder die Auswert- und/oder Steuerstufe (23, 25; 24) so aufgebaut sind, daß vor dem Beginn, bei Beginn oder während des Schließvorganges des Flügels (1a, 1b, 1c) eine Umschaltung in der Sensoreinrichtung (9) und/oder der Auswert- und/oder Steuerstufe (23, 25; 24) derart durchführbar ist, daß von einem großen oder anfänglichen Überwachungs- und Auslösebereich (19) und/oder einer höheren Empfindlichkeit auf einen kleineren und/oder lageveränderten Überwachungs- und Auslösebereich (19') bzw. eine niedrigere Empfindlichkeit derart umgeschaltet wird, daß während des Schließvorganges des Flügels (1a, 1b, 1c) eine Selbstauslösung und Umsteuerung des Flügels (1a, 1b, 1c) in die Öffnungsstellung unterbunden ist.

15. Vorrichtung nach Anspruch 14, **dadurch gekennzeichnet**, daß die Umsteuerung von einer großen und/oder anfänglichen Überwachungs und Auslösezone (19) hin zu einer kleineren und/oder lageveränderlichen Überwachungs- und Auslösezone (19') und/oder von einer höheren hin zu einer niedrigeren Empfindlichkeit zumindest einstufig, vorzugsweise mehrstufig erfolgt.

16. Vorrichtung nach Anspruch 14, **dadurch gekennzeichnet**, daß die Umsteuerung von einer großen und/oder anfänglichen Überwachungs und Auslösezone (19) hin zu einer kleineren und/oder lageveränderlichen Überwachungs- und Auslösezone (19') und/oder von einer höheren hin zu einer niedrigeren Empfindlichkeit kontinuierlich erfolgt.

17. Vorrichtung nach einem der Ansprüche 14 bis 16, **dadurch gekennzeichnet**, daß die Sensoreinrichtung (9) aus einem Bewegungsmelder, vorzugsweise in Form einer Radaranordnung besteht.

18. Vorrichtung nach einem der Ansprüche 14 bis 17, **dadurch gekennzeichnet**, daß die Auswert- und/oder Steuerstufe (23, 25; 24) und/oder die Sensoreinrichtung (9) derart aufgebaut sind, daß die gesamte Sensorik in zeitlichem Zusammenhang mit dem Schließvorgang von einer höheren anfänglichen Empfindlichkeit auf eine niedrigere Empfindlichkeit umschaltbar ist, und zwar zumindest einstufig oder kontinuierlich.

19. Vorrichtung nach einem der Ansprüche 14 bis 18, **dadurch gekennzeichnet**, daß die Auswert- und/oder Steuerstufe (23, 25; 24) und/oder die Sensoreinrichtung (9) derart aufgebaut sind, daß im zeitlichen und/oder positionsabhängigen Zusammenhang mit der Erreichung der Schließstellung des zumindest einen Flügels (1a, 1b, 1c) wiederum eine Umschaltung auf einen großen und/oder anfänglichen Auslöse- und/oder Überwachungsbereich (19) und/oder eine hohe Empfindlichkeit durchführbar ist.

20. Vorrichtung nach einem der Ansprüche 14 bis 19, **dadurch gekennzeichnet**, daß die Auswert- und/oder Steuerstufe (23, 25; 24) und/oder die Sensoreinrichtung (9) während des Flügelzustandes "geschlossener Flügel" und "geöffneter Flügel" auf einen großen Überwachungs- und Auslösebereich (19) und/oder eine hohe Empfindlichkeit der Sensoreinrichtung (9) eingestellt ist.

21. Vorrichtung nach einem der Ansprüche 14 bis 20, **dadurch gekennzeichnet**, daß die Auswert- und/oder Steuerstufe (23, 25; 24) derart aufgebaut ist, daß die Einstellung zumindest eines kleineren Überwachungs- und Auslösebereiches (19') oder die Einstellung zumindest einer niedrigeren Empfindlichkeit der Sensoreinrichtung (9) in einem automatischen Teach-In-Verfahren durchführbar ist.

22. Vorrichtung nach Anspruch 21, **dadurch gekennzeichnet**, daß das Teach-In-Verfahren derart durchführbar ist, daß ausgehend von einer kleineren Überwachungs- und Auslösezone (19') und/oder einer niedrigeren Empfindlichkeit der Sensoreinrichtung (9) eine Verstellung in der Auswert- und/oder Steuerstufe (23, 25; 24) dergestalt vornehmbar ist, daß die wirksame Überwachungs- und Auslösezone (19) vergrößert und/oder die Empfindlichkeit der Sensoreinrichtung (9) derart erhöht wird, bis eine Selbstauslösung erreichbar ist, und daß anschließend eine einen Sicherheitsabstand zur Vermeidung einer Selbstauslösung bewirkende Verstellung vornehm- oder durchführbar ist.

23. Vorrichtung nach einem der Ansprüche 14 bis 22, **dadurch gekennzeichnet**, daß das Teach-In-Verfahren derart durchführbar ist, daß ausgehend von einer größeren Überwachungs und Auslösezone (19') und/oder einer höheren Empfindlichkeit der Sensoreinrichtung (9) eine Verstellung in der Auswert- und/oder Steuerstufe (23, 25; 24) dergestalt vornehmbar ist, daß die wirksame Überwachungs- und Auslösezone (19) verkleinert und/oder die Empfindlichkeit der Sensoreinrichtung (9) derart verringert wird, bis eine Selbstauslösung vermieden ist.

24. Vorrichtung nach einem der Ansprüche 14 bis 23, **dadurch gekennzeichnet**, daß die in dem Teach-In-Verfahren ermittelten Werte zur Vermeidung einer Selbstauslösung einer manuell eingebbaren oder vorgegebenen Korrektur oder Änderung unterziehbar sind.
